# EUROPÄISCHE PATENTSCHRIFT

(11) **EP 3 900 516 B1**
(45) Veröffentlichungstag und Bekanntmachung des Hinweises auf die Patenterteilung: **09.08.2023**
(21) Anmeldenummer: 21169288.4
(22) Anmeldetag: 20.04.2021
(51) Int. Cl.: A01D 34/835, A01D 34/81, A01D 34/63, A01D 34/64

(54) **VORRICHTUNG ZUM MÄHEN VON BEWUCHS ZWISCHEN DÄMMEN UND AN DEN FLANKEN VON DÄMMEN**
DEVICE FOR MOWING VEGETATION BETWEEN DAMS AND ON THE FLANKS OF DAMS
DISPOSITIF DE FAUCHAGE DE COUVERTURE VÉGÉTALE ENTRE BARRAGES ET SUR LES FLANCS DES BARRAGES

(30) Priorität: 21.04.2020 DE 202020102192 U
(43) Veröffentlichungstag der Anmeldung: 27.10.2021
(73) Patentinhaber: Heuling Maschinenbau Gmbh & Co. KG, 33829 Borgholzhausen (DE)
(72) Erfinder: SCHULZE HEULING, Raphael, 48231 Warendorf (DE); SCHULZE HEULING, Ulrich, 48231 Warendorf (DE)
(74) Vertreter: Pellengahr, Maximilian Rudolf

(56) Entgegenhaltungen:
- DE-A1- 4 136 327
- DE-C1- 4 323 627
- DE-U1- 9 404 150
- US-A- 5 435 118
- US-B1- 7 877 971
- US-B1- 10 631 461

## Beschreibung

Die Erfindung betrifft eine Vorrichtung gemäß dem Anspruch 1. Diese Vorrichtung ist zum Mähen von Bewuchs zwischen Dämmen und an den Flanken von Dämmen einer Dammkultur geeignet, auf denen Pflanzen gesetzt sind, wobei die Dämme mit Folie oder anderen Materialien abgedeckt sind.

Die Vorrichtung umfasst eine Mäheinheit mit zwei rotierenden Elementen. Das erste rotierende Element ist von einer Rundbürste gebildet, die eine Vielzahl von Borsten aufweist. Das zweite rotierende Element ist von einem Messer oder einer Schneidscheibe gebildet. Das zweite rotierende Element dient dazu, unerwünschten Bewuchs abzuschneiden bzw. abzumähen. Das erste rotierende Element ist dem zweiten rotierenden Element derart zugeordnet, dass es mit seinen Borsten einen Teilbereich des zweiten rotierenden Elements überstreicht. Hierdurch ist das erste rotierende Element dazu in der Lage, zu mähende Pflanzen dem zweiten rotierenden Element gewissermaßen zuzuleiten. Dabei ist das erste rotierende Element so ausgebildet, dass es bei Berührung der Folie diese nicht verletzt, sondern die auf der Folie liegenden Pflanzenteile der Schneidscheibe zuführt. Die Borsten des ersten rotierenden Elements sind entsprechend flexibel bzw. weich ausgebildet, sodass sie sich reversibel verformen können. Diese Ausbildung stellt sicher, dass das erste rotierende Element einen Eingriff mit einer Folie eines Damms derart vollzieht, dass der Bewuchs von einer Oberfläche der jeweiligen Flanke abgebürstet wird, damit er so dem zweiten rotierenden Element zugeführt wird, welches dann die Schneidarbeit vornimmt.

Weiterhin umfasst die Vorrichtung mindestens ein Führungsrad, mittels dessen die Mäheinheit an einer Flanke eines Dammes in einem definierten Abstand zum Damm führbar ist. Das Führungsrad kann insbesondere gefedert an der Mäheinheit gelagert sein, um in Fällen von Unstetigkeiten entlang eines Damms Ausweichbewegungen machen zu können, gleichwohl jedoch eine seitliche Führungskraft an die Mäheinheit auszuüben, sodass insbesondere eine schädigender Kontakt zwischen dem zweiten rotierenden Element und dem Damm vermieden wird.

### Stand der Technik

In landwirtschaftlichen Sonderkulturen werden Pflanzen auf oder in kleine Dämme gesetzt, um diese vor Nässe zu schützen oder um die Pflanzen über innen liegende Bewässerungsschläuche gezielt mit Wasser und Nährstoffen zu versorgen. Diese Dämme werden zweckmäßigerweise mit lichtundurchlässigen Folien abgedeckt, um einerseits den Unkrautbewuchs zu unterdrücken und um andererseits die Dämme vor Auswaschungen durch starken Regen zu schützen. Weiterhin können die Folien einen Gewächshauseffekt haben, in dem sie die Abstrahlung von Wärme ausgehend von einem jeweiligen Damm in die Atmosphäre behindern.

Zwischen den abgedeckten Flächen der Dämme ist das Wachsen von unerwünschten Pflanzen in den Randbereichen besonders ausgeprägt, da diese Bereiche von der Kulturseite her regelmäßig mit Wasser und Nährstoffen versorgt werden. Somit lässt es sich nicht unterbinden, dass sich zwischen den Dämmen ein Bewuchs entfaltet, der auch Bereiche auf der Folie bedeckt, die insbesondere für herunterhängende Früchte sauber bleiben sollen. Um diesen Bewuchs zu unterbinden, sind unterschiedliche Möglichkeiten bekannt, wobei der Einsatz von chemischen Bekämpfungsmitteln nicht bevorzugt wird, da die Verwendung von chemischen Substanzen auf den Kulturen möglichst begrenzt werden soll. Weiter kann man diese Bereiche gezielt in einer Art und Weise bewachsen lassen, die das Unkrautwachstum unterdrückt.

Für die Pflege der Bereiche zwischen den Dämmen ist nach alldem ein regelmäßiges Mähen unerlässlich. Das ist in den Flächenbereichen zwischen den Dämmen mit bekannten Geräten möglich. Schwierigkeiten ergeben sich jedoch an den Randbereichen im Übergang von z. B. einer Rasenfläche zum Damm bzw. zu dessen Flanke. Der Bewuchs ist in diesem Randbereich in der Regel besonders üppig, da hier neben der guten Wasser- und Nährstoffversorgung je nach Jahreszeit und Witterungsbedingungen auch eine schnellere Bodenerwärmung zu beobachten ist, wobei sich die Pflanzenteile wie Blätter, Gräser oder dergleichen, gerne auf die Folie ablegen.

Im dem Stand der Technik sind Mähgeräte wie beispielsweise von Hand geführte Rasenmäher bekannt. Diese können aber auch an einem fahrbaren Trägerfahrzeug angeordnet sein. Die bekannten Mähgeräte sind jedoch nicht in der Lage, insbesondere den kritischen Randbereich der Flanken an Dämmen von Bewuchs zu befreien.

Weiterhin ist aus der deutschen Offenlegungsschrift DE 41 36 327 A1 eine landwirtschaftliche Maschine zum Mähen von Grünbewuchs sowie zur Bodenbearbeitung bekannt. Die Maschine verfügt über einen seitliche Schwenkarm, an dem neben einer Schneideinrichtung, die mehrere, um eine Rotationsachse drehantreibbare Messer aufweist, ferner eine Rundbürste angeordnet ist, die mit einer Vielzahl von Borsten ausgestattet ist. Der Schwenkarm dient dazu, seitlich von einem Hauptteil der Maschine befindliches Gras zu erfassen und abzuschneiden. Die Schwenkbarkeit des Schwenkarms verhilft dabei dazu, dass die Schneideinrichtung, die an dem Schwenkarm angeordnet ist, lediglich bedarfsweise eingesetzt werden kann, nämlich dort, wo Randbereiche abzumähen sind. Die an dem Schwenkarm angeordnete Rundbürste dient überdies dazu, abzuschneidendes Gras, das in unmittelbarer Nähe zu einem Hindernis, beispielsweise einem Pfahl, wächst, der Schneideinrichtung zuzuführen. Ferner kann die Rundbürste selbst eine Schneid- oder Schlagfunktion aufweisen, sodass sie unmittelbar Triebe oder Gras abschneiden bzw. abschlagen kann. Auf diese Weise kann ein jeweiliges Hindernis sauber von unerwünschten Pflanzen befreit werden, ohne dass die Schneideinrichtung nah an das Hindernis herangeführt werden muss. Hierdurch lassen sich insbesondere Beschädigungen der Schneideinrichtung vermeiden. Zum Mähen von Pflanzen im Bereich zwischen Dämmen einer Dammkultur ist die Maschine nicht geeignet, da sie eine Beschädigung der Folie und/oder des Damms selbst herbeiführen könnte.

### Aufgabe

Der Erfindung liegt daher die Aufgabe zugrunde, eine Vorrichtung zum Mähen zur Verfügung zu stellen, die insbesondere zum Mähen von Bereichen zwischen Dämmen einer Dammkultur geeignet ist.

### Lösung

Erfindungsgemäß wird die Aufgabe mit den Merkmalen des Anspruchs 1 gelöst. Vorteilhafte Ausgestaltungen ergeben sich aus den Unteransprüchen.

Die Vorrichtung ist durch ein Gehäuse gekennzeichnet, in dem das zweite rotierende Element angeordnet ist. Das Gehäuse weist vorteilhafterweise einen kreisförmig abgerundeten Rand auf. Das Gehäuse weist eine Teilöffnung auf, wobei die Borsten des ersten rotierenden Elements in die Teilöffnung des Gehäuses greifen. Hierdurch können die Borsten einen Teilbereich des zweiten rotierenden Elements überstreichen. Hierbei kann beispielsweise das erste rotierende Element mit einem Teilbereich unterhalb oder oberhalb des zweiten rotierenden Elements liegen, sodass in effektiver Weise der von der Flanke des jeweiligen Damms abgebürstete Bewuchs besonders effektiv dem zweiten rotierenden Element zugeführt werden kann. Das in dem Gehäuse angeordnete, zweite rotierende Element schlägt oder schneidet dann ihm auf diese Weise zugeführte Pflanzenstängel ab, woraufhin die abgeschnittenen Pflanzen zwischen die Dämme fallen.

Die Teilöffnung ist vorzugsweise in einem Deckel des Gehäuses angeordnet, wobei vorzugsweise sich die Teilöffnung in Form eines Randausschnitts ausgehend von einem Rand des Gehäuses in einer Deckelebene erstreckt. Der "Randausschnitt" meint hier, dass die Teilöffnung sich ausgehend von einem umlaufenden Rand des Deckels des Gehäuses in Richtung eine Mittelbreichs des Deckels erstreckt. Die Teilöffnung kann flächenmäßig insbesondere zwischen 20 % und 30 % einer Gesamtfläche des Deckels ausmachen, die der Deckel ohne Teilöffnung hätte. Eine entsprechende Ausgestaltung ist auch dem Ausführungsbeispiel entnehmbar.

Die erfindungsgemäße Vorrichtung hat viele Vorteile. Insbesondere ist infolge der Einhausung des zweiten rotierenden Elements sichergestellt, dass dieses weder direkt noch indirekt einen jeweiligen Damm oder eine darauf liegende Folie beschädigen kann. Aufgrund der Teilöffnung des Gehäuses, in dem das erste rotierende Element wirkt, bleibt gleichwohl die Funktion des ersten rotierenden Elements, nämlich die Zuleitung von abzuschneidenden Pflanzen im Randbereich der Flanke des jeweiligen Damms zu dem zweiten rotierenden Element, erhalten. Somit kombiniert die Erfindung eine besonders gute Reinigung bzw. ein besonders gutes Abmähen von Pflanzen im Randbereich am Übergang der Flanke eines jeweiligen Damms sowie an der Flanke selbst mit einem sicheren Betrieb, der den Damm als solchen nicht beeinträchtigt. Wie bereits erwähnt, weist das als Rundbürste ausgebildete erste rotierende Element dabei den Vorteil auf, dass es mit seinen, vorzugsweise äquidistant angeordneten, Borsten in die Teilöffnung des Gehäuses einerseits eingreift und andererseits ein Abbürsten des Bewuchses von einer Oberfläche der Flanke des jeweiligen Damms vornimmt, ohne dass dabei die Folie des Damms beschädigt wird.

In einer vorteilhaften Ausgestaltung ist das Gehäuse topfförmig ausgebildet, sodass es das zweite rotierende Element topfförmig einfasst. Dies erfolgt vorzugsweise derart, dass das Messer oder die Schneidscheibe zum einen nach oben mittels eines Deckels des Gehäuses als auch seitlich mittels eines randseitig an dem Deckel angeordneten Kragens eingehaust ist. Auf diese Weise ist sichergestellt, dass mit dem zweiten rotierenden Element in Kontakt tretende Teilchen, die im Zuge einer Rotation des zweiten rotierenden Elements von selbigem getroffen und beschleunigt werden, von dem Gehäuse aufgehalten werden. Hierdurch ist der jeweilige Damm, insbesondere eine auf dem Damm liegende Folie, vor Beschädigungen geschützt.

Weiterhin ist eine solche Ausgestaltung von Vorteil, bei der das erste rotierende Element vertikal oberhalb des zweiten rotierenden Elements angeordnet ist, wobei vorzugsweise die Borsten des ersten rotierenden Elements während eines Betriebs der Vorrichtung nicht in unmittelbaren Kontakt mit dem zweiten rotierenden Element treten. Diese Anordnung der rotierenden Elemente ist vorteilhaft, damit das erste rotierende Element entlang der typischerweise schräg verlaufenden Flanke eines Damms etwas weiter in Richtung Damm versetzt an der Vorrichtung angeordnet sein kann. Der Höhenversatz der beiden rotierenden Elemente erleichtert außerdem die Vermeidung eines unmittelbaren Kontakts, wodurch vor allem ein Verschleiß der Borsten des ersten rotierenden Elements infolge eines schlagenden Kontakts mit dem Messer oder der Schneidscheibe des zweiten rotierenden Elements vermieden wird.

Die erfindungsgemäße Vorrichtung weiter ausgestaltend ist das erste rotierende Element - in einer Draufsicht der Vorrichtung betrachtet - exzentrisch zu dem zweiten rotierenden Element angeordnet. Diese Ausgestaltung erleichtert es, die Wirkungsbereiche der rotierenden Elemente zu entzerren, sodass insbesondere das erste rotierende Element besonders nah bzw. in unmittelbarem Kontakt mit der Flanke eines jeweiligen Damms arbeiten kann, während das zweite rotierende Element in einem Abstand zu der Flanke bleibt, sodass Beschädigungen des Damms verhindert sind.

In einer weiterhin vorteilhaften Ausgestaltung der Vorrichtung verlaufen Rotationsachsen der beiden rotierenden Elemente nicht-parallel zueinander, vorzugsweise windschief zueinander. Diese Anordnung der Rotationsachsen ermöglicht eine optimale Anpassung der rotierenden Elemente an ihre jeweiligen Wirkungsbereiche. Somit ist das zweite rotierende Element vorzugsweise zumindest im Wesentlichen parallel zu einer Oberfläche des jeweiligen Untergrundes orientiert, sodass die Rotationsachse des zweiten rotierenden Elements zumindest im Wesentlichen vertikal orientiert ist. Da die Flanke des jeweils angrenzenden Damms, an der das erste rotierende Element wirkt, typischerweise schräg unter einem Winkel <90° zu dem Untergrund verläuft und die Borsten des ersten rotierenden Elements bevorzugt entlang einer Oberfläche der Flanke streichen, ist es vorteilhaft, wenn die Rotationsachse des ersten rotierenden Elements zumindest im Wesentlichen parallel zu der Oberfläche der Flanke orientiert ist, das heißt mit einer ähnlichen oder gleichen Neigung relativ zur Oberfläche des Untergrunds. Die Rotationsachse des ersten rotierenden Elements ist dann insbesondere nicht-parallel zu der Rotationsachse des zweiten rotierenden Elements. Eine windschiefe Anordnung ergibt sich aus einer überdies in Bewegungsrichtung der Vorrichtung betrachtet versetzten Anordnung der beiden rotierenden Elemente, die gemäß obigen Ausführungen vorteilhaft sein kann.

In einer vorteilhaften Weiterbildung zeichnet sich die Vorrichtung weiterhin dadurch aus, dass für den Bereich zwischen zwei erhöhten und mit Folie abgedeckten Pflanzenbereichen die Vorrichtung sich als autarke Einheit auf eigenen Rädern bewegen kann oder dass sie an einem Trägerfahrzeug angebracht ist. Hierbei wird in vorteilhafter Weise die Vorrichtung seitlich am Damm bewegt und durch das Führungsrad in einem definierten Abstand zum Damm geführt. Aufgrund dieser Ausbildung wird erreicht, dass der nicht gewünschte Bewuchs in einem Horizont abgetrennt wird, sodass die Flanke von dem Bewuchs befreit wird.

Die Vorrichtung weiter ausgestaltend kann selbige zusätzlich zur seitlichen Führung ferner in der Höhe beweglich ausgestaltet sein, wobei die Vorrichtung mittels eines Höhenführungsrads oder mehrerer Höhenführungsräder in der Höhe geführt wird. Das zweite rotierende Element wird durch die Zuordnung des seitlichen Führungsrades ebenfalls in einem definierten Abstand zur Dammflanke gehalten. Hierbei kann der definierte Abstand sowohl positiv als auch negativ sein. Ein negativer Abstand bedeutet, dass das erste rotierende Element am Umfang flexibel sein muss, um sich im Kontaktbereich zum Damm eindrücken zu lassen, sodass der Damm unbeschädigt bleibt.

Gemäß der Erfindung ist die Vorrichtung als eine Einheit mit eigenen Rädern oder an einem Trägerfahrzeug bewegbar ausgebildet, wobei die Mäheinheit an der Flanke eines jeweiligen Damms zumindest mittels des Führungsrads seitlich in einem definierten Abstand zum Damm geführt ist und durch mindestens ein Höhenführungsrad an geeigneter Stelle in der Höhe geführt wird. Aufgrund dieser Ausbildung wird erreicht, dass bei der Fahrt entlang des Dammes ein gewisses Schneidniveau eingehalten wird, welches insbesondere den unteren Randbereich der Flanke von Bewuchs befreit. Vorteilhafterweise ist das erste rotierende Element und/oder das Führungsrad unter Wirkung einer Federkraft in Kontakt zu der Flanke eines jeweiligen Damms gehalten.

Alternativ oder zusätzlich zum Aufbringen einer Federkraft zur Haltung des ersten rotierenden Elements in Kontakt mit der Flanke des Damms kann es weiterhin von Vorteil sein, wenn das Höhenführungsrad bezogen auf eine Bewegungsrichtung der Vorrichtung schräg gestellt ist. Die Schrägstellung kann insbesondere derart ausgebildet sein, dass eine Drehachse des Höhenführungsrades und die Bewegungsrichtung der Vorrichtung, die sich parallel zu einer Längsachse des zu bearbeitenden Damms erstreckt, einen Winkel zwischen 95° und 60°, vorzugsweise zwischen 85° und 70°, einschließen. Die Schrägstellung liegt vorzugsweise derart vor, dass sich ein in Bewegungsrichtung der Vorrichtung vorderes Ende des Höhenführungsrades näher an dem zu bearbeitenden Damm befindet als das hintere Ende des Höhenführungsrades. Mit anderen Worten lenkt das Höhenführungsrad gewissermaßen auf den Damm zu. Die Schrägstellung des Höhenführungsrades bewirkt eine horizontal quer zur Bewegungsrichtung der Vorrichtung wirkende Kraft, die bestrebt ist, die Vorrichtung "zur Seite" auf den zu bearbeitenden Damm zu zu bewegen. Diese Kraft führt dazu, dass das erste rotierende Element fortwährend gegen die Flanke des Damms gedrückt wird, wodurch in der gewünschten Weise der dauerhafte Kontakt zwischen erstem rotierenden Element und Damm sichergestellt ist.

Nach einer besonders vorteilhaften Ausgestaltung der Erfindung umfasst die Vorrichtung Befestigungen sowohl für das seitliche Führungsrad als auch für das erste rotierende Element, wobei die Befestigungen es erlauben, diese Elemente in einem Winkel zur Oberfläche der Flanke des Damms zu verstellen und so eine effektive Abbürstung des Bewuchses zu erreichen. Das an einem Gestell zur Oberfläche der Flanke weisende seitliche Führungsrad ist zur Begrenzung der Andrucktiefe des ersten rotierenden Elements vorgesehen. Aufgrund dieser Ausbildung wird erreicht, dass das erste rotierende Element nicht zu stark auf die Folie des Damms einwirkt, sondern nur die Borsten in ihrem flexibel gehaltenen Bereich zum Eingriff mit der Folie kommen.

Nach einer besonders vorteilhaften Ausgestaltung der Erfindung ist das Gestell mittels eines Ausgleichsgelenks mit einem Zugfahrzeug verbunden, wobei das Ausgleichsgelenk parallel angeordnete, schwenkbar gelagerte Zug- oder Druckstangen umfasst. Aufgrund dieser Ausbildung wird eine schwenkbare Höhenverstellung für die Vorrichtung bereitgestellt, die sich lagestabil durch die beiden parallel geführten Zug- oder Druckstangen auf und ab bewegen kann.

In Weiterbildung der Erfindung verfügen beide rotierende Elemente jeweils über einen motorischen Antrieb.

### Ausführungsbeispiele

Die Erfindung ist nachstehend anhand eines Ausführungsbeispiels, das in den Figuren dargestellt ist, näher erläutert. Es zeigt:
- Fig. 1:: Eine Draufsicht auf eine erfindungsgemäße Vorrichtung,
- Fig. 2:: Eine Ansicht der Vorrichtung gemäß Figur 1 in einer Schnittansicht,
- Fig. 3:: Eine Stirnansicht der Vorrichtung gemäß Figur 1, dargestellt in einer Arbeitslage an einem Damm mit einem seitlichen Führungsrad sowie
- Fig. 4:: Eine Seitenansicht der Vorrichtung gemäß Figur 1 mit einer Mäheinheit, einem Höhenführungsrad und einem Gestell für ein Trägerfahrzeug.

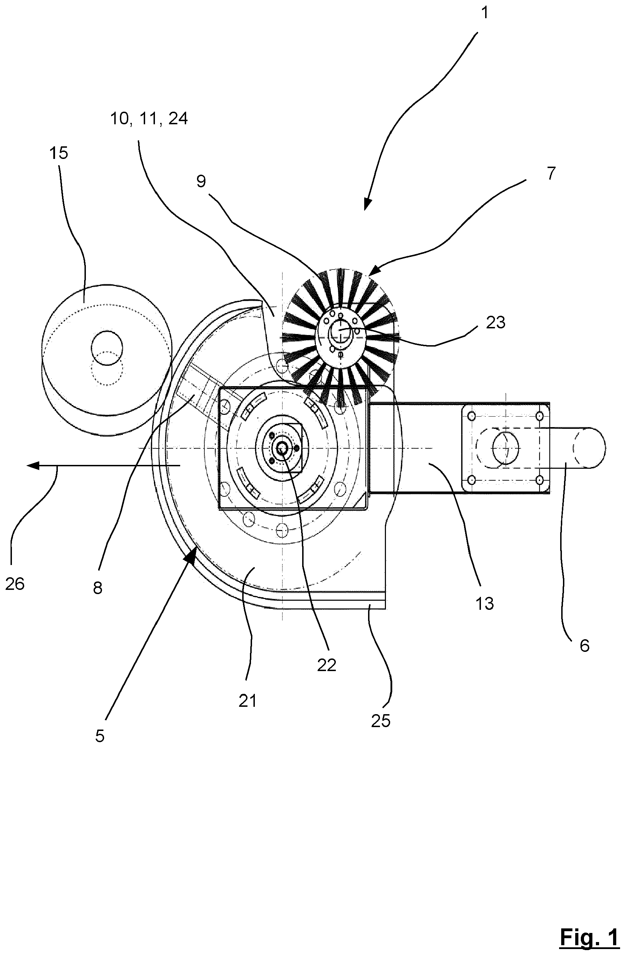

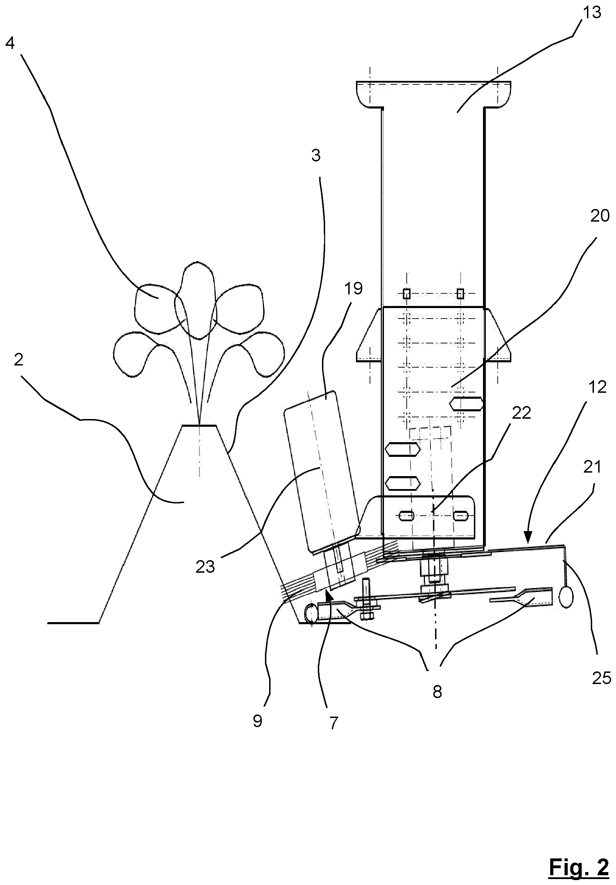

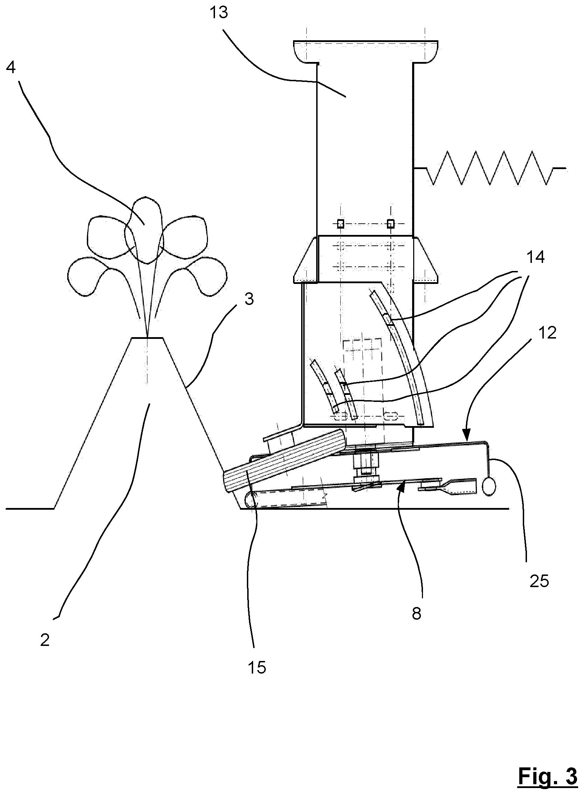

Die **Figuren 1 bis 4** zeigen in unterschiedlichen Ansichten eine Vorrichtung **1** zum Mähen von Bewuchs zwischen Dämmen **2,** wie diese in den **Figuren 2** **und** **3** angedeutet sind. Zwischen den Dämmen **2** sowie an Flanken **3** der Dämme **2** entfaltet sich ein nicht näher dargestellter Bewuchs, der die Flanken **3** der Dämme **2** mit der Zeit bedeckt, sodass die Dammkultur mit ihren Pflanzen **4** Schaden nehmen kann. Die Dämme **2** sind dabei mit einer ebenfalls nicht näher dargestellten Folie abgedeckt.

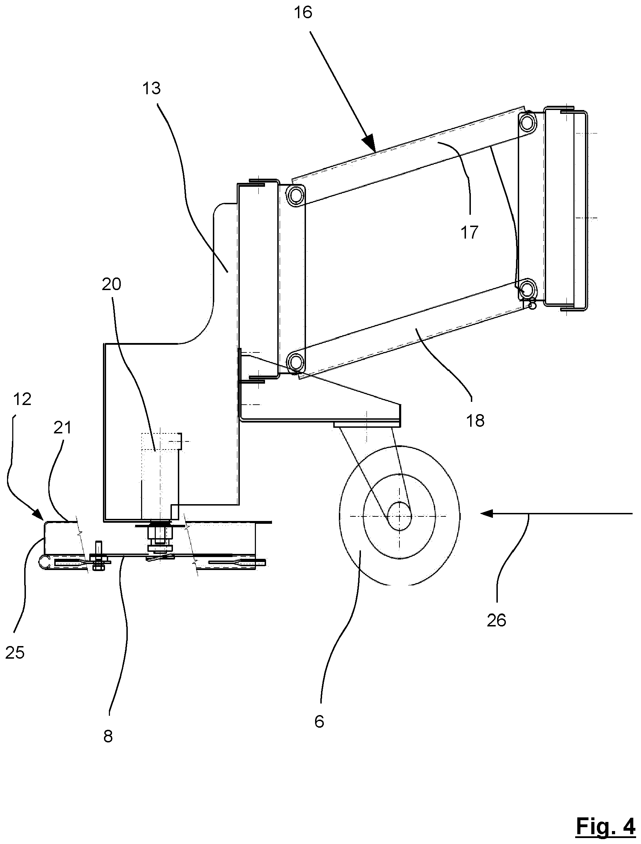

Wie insbesondere aus den **Figuren 1** **und** **4** erkennbar, kann die Vorrichtung **1** als eine Einheit mit eigenen Rädern oder an einem nicht näher dargestellten Trägerfahrzeug bewegbar ausgebildet sein. Mittels des letzteren ist die Vorrichtung **1** in eine Bewegungsrichtung **26** entlang der Dämme **2** bewegbar. Die Vorrichtung **1** umfasst eine Mäheinheit **5,** die als solche an der Flanke **3** des Dammes **2** zumindest durch ein Führungsrad **15,** dargestellt in den **Figuren 1****,** **3** **und** **4****,** in einem definierten Abstand zur Flanke **3** geführt ist. Die Mäheinheit **5,** so wie sie in der Darstellung der **Figur 1** in der Draufsicht erkennbar ist, umfasst ein erstes rotierendes Element **7** und ein zweites rotierendes Element **8,** welches mit dem ersten, an einer Oberfläche der Flanke **3** anliegenden rotierenden Element **7** zusammenwirkt. Dies ist insbesondere in der Draufsicht zu erkennen, wobei zwischen dem ersten rotierenden Element **7** und dem zweiten rotierenden Element **8** ein Teilbereich **10** erkennbar ist, in dem das erste rotierende Element **7** das zweite rotierende Element **8** überstreicht. Dabei umfasst das erste rotierende Element **7** eine Rundbürste, wobei das zweite rotierende Element **8** ein Messer umfasst, wobei das erste rotierende Element **7** in seiner Anordnung bzw. in seiner Lage mit seinen Borsten **9** den Teilbereich **10** des zweiten rotierenden Elements **8** überstreicht. Rotationsachsen **22, 23** der beiden rotierenden Elemente **7, 8** sind hier in einem Abstand zueinander angeordnet sowie windschief zueinander.

Wie insbesondere aus der Zusammenschau der **Figuren 1****,** **2** **und** **3** erkennbar ist, ist das zweite rotierende Element **8** in einem mit einer Teilöffnung **11** versehenen Gehäuse **12** angeordnet. Das Gehäuse **12** ist hier topfförmig ausgebildet und umfasst einen oberen Deckel **21** sowie einen randseitigen Kragen **25.** Wie aus der **Figur 1** zudem erkennbar, greift das erste rotierende Element **7** mit seinen hier äquidistant angeordneten Borsten **9** in die Teilöffnung **11** des Messergehäuses **12** ein, wobei die Teilöffnung hier in Form eines Randausschnitts **24** in dem Deckel **21** des Gehäuses **12** ausgebildet ist. Hieraus wird ersichtlich, dass beispielsweise ein von einer Oberfläche einer Flanke **3** abgebürsteter Bewuchs zunächst von der Folie abgebürstet wird, wobei durch die Drehung des ersten rotierenden Elements **7** der Bewuchs im Bereich der Teilöffnung **11** in das Messergehäuse **12** befördert wird, in dem dann infolge des sich drehenden zweiten rotierenden Elements **8** der Bewuchs abgetrennt wird. Das zweite rotierende Element **8** kann hierbei, wie dargestellt, aus einer Schneidscheibe bestehen, an der ein Messer schwenkbar gelagert ist.

Wie insbesondere aus der **Figur 3** in der Vorderansicht erkennbar ist, ist die Vorrichtung **1** mit einem verfahrbaren Gestell **13** ausgebildet. Ebenfalls erkennbar ist, dass das seitliche Führungsrad **15** über Befestigungselemente **14** in einer Winkellage verstellt und festgesetzt werden kann. Somit besteht die Möglichkeit, die Mäheinheit **5** entsprechend einer Neigung der Oberfläche der Flanke **3** des jeweiligen Damms **2** anzupassen, sodass immer ein zur Oberfläche der Flanke **3** senkrechtes Abbürsten mittels des ersten rotierenden Elements **7** erfolgen kann.

Wie insbesondere weiter aus der **Figur 1** i. V. m. der **Figur 3** erkennbar ist, ist an dem Gestell **13** ein zur Oberfläche der Flanke **3** weisendes Führungsrad **15** zur Begrenzung einer Andrucktiefe des ersten rotierenden Elements **7** vorgesehen. Wie insbesondere aus der **Figur 1** erkennbar ist, begrenzt das Führungsrad **15** insbesondere die flexiblen bzw. weichen Borsten **9** des ersten rotierenden Elements **7,** sodass diese mit ihrem flexiblen Ende entsprechend den Bewuchs von der Folie abbürsten können, ohne die Folie zu beschädigen.

In Weiterbildung ist an dem Gestell **13** ein Höhenführungsrad **6** für die Mäheinheit **5** vorgesehen. Wie bereits beschrieben, ist insbesondere das Höhenführungsrad **6** dafür verantwortlich, dass der Schneidhorizont im Zwischendammbereich vorgegeben wird.

In Weiterbildung des Gestells **13** ist dieses mittels eines Ausgleichsgelenks **16** mit einem Trägerfahrzeug, das nicht näher dargestellt ist, verbunden. Das Ausgleichsgelenk **16** umfasst hier parallel angeordnete, schwenkbar gelagerte Zugstangen **17** oder Druckstangen **18,** die insbesondere einen vertikalen Verstellbereich vorgeben, innerhalb der die Mäheinheit **5** auf- und abfahren kann.

In Weiterbildung verfügen jeweils das erste rotierende Element **7** und das zweite rotierende Element **8** über einen motorischen Antrieb **19, 20.**

### Bezugszeichenliste

- 1: Vorrichtung
- 2: Damm
- 3: Flanke
- 4: Pflanze
- 5: Mäheinheit
- 6: Höhenführungsrad
- 7: Erstes rotierendes Element
- 8: Zweites rotierendes Element
- 9: Borsten
- 10: Teilbereich
- 11: Teilöffnung
- 12: Gehäuse
- 13: Gestell
- 14: Befestigungselement
- 15: Führungsrad
- 16: Ausgleichsgelenk
- 17: Zugstange
- 18: Druckstange
- 19: Antrieb
- 20: Antrieb
- 21: Deckel
- 22: Rotationsachse
- 23: Rotationsachse
- 24: Randausschnitt
- 25: Kragen
- 26: Bewegungsrichtung

## Patentansprüche

1. Vorrichtung (1) zum Mähen von Bewuchs zwischen Dämmen (2) und an Flanken (3) von Dämmen (2) einer Dammkultur, auf denen Pflanzen (4) gesetzt sind und die mit Folie oder ähnlichem Material abgedeckt sind, umfassend
- eine Mäheinheit (5) mit zwei rotierenden Elementen (7, 8) sowie
- ein Führungsrad (15), mittels dessen die Mäheinheit (5) an einer Flanke (3) eines Dammes (2) in einem definierten Abstand zum Damm (2) führbar ist,
wobei ein erstes rotierendes Element (7) von einer Borsten (9) aufweisenden Rundbürste und das zweite rotierende Element (8) von einem Messer oder einer Schneidscheibe gebildet sind,
wobei das erste rotierende Element (7) mit seinen Borsten (9) einen Teilbereich (10) des zweiten rotierenden Elements (8) überstreicht,
wobei die Vorrichtung (1) als eine Einheit mit eigenen Rädern oder an einem Trägerfahrzeug bewegbar ausgebildet ist,
**gekennzeichnet durch**
ein Gehäuse (12), das eine Teilöffnung (11) umfasst,
wobei das zweite rotierende Element (8) in dem Gehäuse (12) angeordnet ist,
wobei die Borsten (9) des ersten rotierenden Elements (7) in die Teilöffnung (11) des Gehäuses (12) greifen.

2. Vorrichtung (1) nach Anspruch 1, **dadurch gekennzeichnet, dass** die Teilöffnung in einem Deckel (21) des Gehäuses (12) ausgebildet ist, vorzugsweise in Form eines Randausschnitts (24).

3. Vorrichtung (1) nach einem der vorhergehenden Ansprüche, **dadurch gekennzeichnet, dass** das Gehäuse (12) topfförmig mit einem Deckel (21) und einem an dem Deckel (21) randseitig umlaufenden Kragen (25) ausgebildet ist, wobei der Deckel (21) das zweite rotierende Element (8) von oben und der Kragen (25) das zweite rotierende Element (8) radialseitig zumindest teilweise einfassen.

4. Vorrichtung (1) nach einem der vorhergehenden Ansprüche, **dadurch gekennzeichnet, dass** das erste rotierende Element (7) vertikal oberhalb des zweiten rotierenden Elements (8) angeordnet ist, wobei vorzugsweise die Borsten (9) des ersten rotierenden Elements (7) während eines Betriebs der Vorrichtung (1) nicht in unmittelbaren Kontakt mit dem zweiten rotierenden Element (8) tritt.

5. Vorrichtung (1) nach einem der vorhergehenden Ansprüche, **dadurch gekennzeichnet, dass** das erste rotierende Element (7) - in einer Draufsicht der Vorrichtung (1) betrachtet - exzentrisch zu dem zweiten rotierenden Element (8) angeordnet ist.

6. Vorrichtung (1) nach einem der vorhergehenden Ansprüche, **dadurch gekennzeichnet, dass** Rotationsachsen (22, 23) der beiden rotierenden Elemente (7, 8) nicht-parallel zueinander, vorzugsweise windschief zueinander, verlaufen.

7. Vorrichtung (1) nach einem der vorhergehenden Ansprüche, **dadurch gekennzeichnet, dass** die Mäheinheit (5) zur Einhaltung einer definierten Arbeitshöhe in einem Dammzwischenraum zwischen zwei Dämmen (2) wenigstens ein Höhenführungsrad (6) aufweist.

8. Vorrichtung (1) nach Anspruch 7, **dadurch gekennzeichnet, dass** das Höhenführungsrad (6) zumindest zeitweise, vorzugsweise durchgehend, bezogen auf eine Bewegungsrichtung (26) der Vorrichtung (1) schräg gestellt ist, wobei vorzugsweise eine Drehachse des Höhenführungsrades (6) und die Bewegungsrichtung (26) der Vorrichtung (1) einen Winkel zwischen 95° und 60°, vorzugsweise zwischen 85° und 70°, einschließen.

9. Vorrichtung (1) nach einem der vorhergehenden Ansprüche, **dadurch gekennzeichnet, dass** das Führungsrad (15) an einem Gestell (13) der Vorrichtung (1) zur Flanke (3) eines Dammes (2) weisend angeordnet und zur Begrenzung einer Andrucktiefe des ersten rotierenden Elements (7) vorgesehen ist, wobei vorzugsweise das Führungsrad (15) - in Bewegungsrichtung (26) der Vorrichtung (1) betrachtet - dem zweiten rotierenden Element (8) vorgeschaltet ist.

10. Vorrichtung (1) nach Anspruch 9, **gekennzeichnet durch** ein Ausgleichsgelenk (16), mittels dessen das Gestell (13) mit einem Trägerfahrzeug verbindbar ist.

11. Vorrichtung (1) nach Anspruch 10, **dadurch gekennzeichnet, dass** das Ausgleichgelenk (16) parallel angeordnete, schwenkbar gelagerten Zugstangen (17) oder Druckstangen (18) umfasst.

12. Vorrichtung (1) nach einem der vorhergehenden Ansprüche, **dadurch gekennzeichnet, dass** das erste rotierende Element (7) und/oder das Führungsrad (15) unter Wirkung einer Federkraft in Kontakt zu der Flanke (3) eines jeweiligen Damms (2) haltbar sind.

13. Vorrichtung (1) nach einem der vorhergehenden Ansprüche, **dadurch gekennzeichnet, dass** das erste rotierende Element (7) und das zweite rotierende Element (8) über je einen motorischen Antrieb (19, 20) verfügen.

## Claims

1. Device (1) for mowing vegetation between embankments (2) and on the flanks (3) of embankments (2) of an embankment culture, on which plants (4) are planted, and which are covered with foil, or a similar material, comprising
- a mowing unit (5) with two rotating elements (7, 8), together with
- a guide wheel (15), by means of which the mowing unit (5) can be guided along a flank (3) of an embankment (2) at a defined distance from the embankment (2), wherein
a first rotating element (7) is formed by a circular brush that has bristles (9), and the second rotating element (8) is formed by a blade, or a cutting disc, wherein
the first rotating element (7) with its bristles (9) sweeps over a partial region (10) of the second rotating element (8), wherein
the device (1) is designed as a unit with its own wheels, or as one that can be moved on a carrier vehicle,
**characterised by**,
a housing (12) that comprises a partial opening (11), wherein
the second rotating element (8) is arranged in the housing (12), wherein
the bristles (9) of the first rotating element (7) engage with the partial opening (11) of the housing (12) .

2. Device (1) according to Claim 1,
**characterised in that**,
the partial opening is formed in a cover (21) of the housing (12), preferably in the form of an edge cut-out (24) .

3. Device (1) according to one of the preceding claims,
**characterised in that**,
the housing (12) is designed in the shape of a pan with a cover (21), and a collar (25) running around the edge of the cover (21), wherein
the cover (21) encloses the second rotating element (8) from above, and the collar (25) encloses the second rotating element (8), at least partially, on the radial side.

4. Device (1) according to one of the preceding claims,
**characterised in that**,
the first rotating element (7) is arranged vertically above the second rotating element (8), wherein
the bristles (9) of the first rotating element (7) preferably do not come into direct contact with the second rotating element (8) during operation of the device (1).

5. Device (1) according to one of the preceding claims,
**characterised in that**,
the first rotating element (7) - as viewed in a plan view of the device (1) - is arranged eccentrically with respect to the second rotating element (8).

6. Device (1) according to one of the preceding claims,
**characterised in that**,
axes of rotation (22, 23) of the two rotating elements (7, 8) do not run parallel to each other, but preferably at an angle to each other.

7. Device (1) according to one of the preceding claims,
**characterised in that**,
the mowing unit (5) has at least one height guide wheel (6) for purposes of maintaining a defined working height in an intermediate space between two embankments (2).

8. Device (1) according to Claim 7,
**characterised in that**,
the height guide wheel (6), at least at times, preferably continuously, is inclined with respect to a direction of movement (26) of the device (1), wherein
an axis of rotation of the height guide wheel (6), and the direction of movement (26) of the device (1), preferably enclose an angle of between 95° and 60°, preferably between 85° and 70°.

9. Device (1) according to one of the preceding claims,
**characterised in that**,
the guide wheel (15) is arranged on a frame (13) of the device (1) facing towards the flank (3) of an embankment (2), and is provided for purposes of limiting a contact pressure depth of the first rotating element (7), wherein
the guide wheel (15) - as viewed in the direction of movement (26) of the device (1) - is preferably positioned ahead of the second rotating element (8).

10. Device (1) according to Claim 9,
**characterised by**,
a compensating joint (16), by means of which the frame (13) can be connected to a carrier vehicle.

11. Device (1) according to Claim 10,
**characterised in that**,
the compensating joint (16) comprises tension rods (17) or compression rods (18) arranged in parallel, and mounted such that they can pivot.

12. Device (1) according to one of the preceding claims,
**characterised in that**,
the first rotating element (7), and/or the guide wheel (15), can be maintained in contact with the flank (3) of a respective embankment (2) under the action of a spring force.

13. Device (1) according to one of the preceding claims,
**characterised in that**,
the first rotating element (7) and the second rotating element (8) each have a motor drive (19, 20).

## Revendications

1. Dispositif (1), destiné à faucher de la végétation entre des digues (2) et des flancs (3) de digues (2) d'une culture sur ados, sur lesquel(le)s sont plantés des végétaux (4) et qui sont recouverts d'un film ou d'une matière analogue, comprenant
- une unité de fauchage (5), pourvue de deux éléments (7, 8) rotatifs, ainsi
- qu'une roue de guidage (15), au moyen de laquelle l'unité de fauchage (5) est susceptible d'être guidée sur un flanc (3) d'une digue (2), avec un écart défini par rapport à la digue (2),
un premier élément (7) rotatif étant constitué d'une brosse ronde comportant des poils (9) et le deuxième élément (8) rotatif étant constitué d'une lame ou d'un disque de coupe,
le premier élément (7) rotatif effleurant par ses poils (9) une zone partielle (10) du deuxième élément (8) rotatif,
le dispositif (1) étant conçu sous la forme d'une unité pourvue de propres roues ou en étant déplaçable sur un véhicule porteur,
**caractérisé par**
un carter (12), qui comprend une ouverture partielle (11),
le premier élément (8) rotatif étant placé dans le carter (12), les poils (9) du premier élément (7) rotatif s'engageant dans l'ouverture partielle (11) du carter (12).

2. Dispositif (1) selon la revendication 1, **caractérisé en ce que** l'ouverture partielle est conçue dans un couvercle (21) du carter (12), de préférence sous la forme d'une échancrure périphérique (24).

3. Dispositif (1) selon l'une quelconque des revendications précédentes, **caractérisé en ce que** le carter (12) est conçu en forme de pot, doté d'un couvercle (21) et d'une collerette (25) périphérique sur le bord du couvercle (21), le couvercle (21) bordant le deuxième élément (8) rotatif par le haut et la collerette (25) bordant au moins partiellement le deuxième élément (8) rotatif du côté radial.

4. Dispositif (1) selon l'une quelconque des revendications précédentes, **caractérisé en ce que** le premier élément (7) rotatif est placé à la verticale au-dessus du deuxième élément (8) rotatif, de préférence les poils (9) du premier élément (7) rotatif n'entrant pas en contact direct avec le deuxième élément (8) rotatif pendant un fonctionnement du dispositif (1).

5. Dispositif (1) selon l'une quelconque des revendications précédentes, **caractérisé en ce que** (considéré selon une vue en élévation sur le dispositif (1)), le premier élément (7) rotatif est placé de manière excentrique par rapport au deuxième élément (8) rotatif.

6. Dispositif (1) selon l'une quelconque des revendications précédentes, **caractérisé en ce que** des axes de rotation (22, 23) des deux éléments (7, 8) rotatifs ne s'écoulent pas à la parallèle les uns des autres, de préférence en gauchis les uns par rapport aux autres.

7. Dispositif (1) selon l'une quelconque des revendications précédentes, **caractérisé en ce que** pour respecter une hauteur de travail définie dans un espace intermédiaire de digue entre deux digues (2), l'unité de fauchage (5) comporte au moins une roue de guidage (6) en hauteur.

8. Dispositif (1) selon la revendication 7, **caractérisé en ce que** la roue de guidage (6) en hauteur est placée en oblique au moins temporairement, de préférence en continu, en rapport à un sens de déplacement (26) du dispositif (1), de préférence un axe de rotation de la roue de guidage (6) en hauteur et le sens de déplacement (26) du dispositif (1) incluant un angle compris entre 95 ° et 60 °, de préférence entre 85 ° et 70 °.

9. Dispositif (1) selon l'une quelconque des revendications précédentes, **caractérisé en ce que** la roue de guidage (15) est placée sur un châssis (13) du dispositif (1), en étant dirigée vers le flanc (3) d'une digue (2) et étant prévue pour délimiter une profondeur de pression du premier élément (7) rotatif, de préférence la roue de guidage (15) (considérée dans le sens de déplacement (26) du dispositif (1)) étant montée en amont du deuxième élément (8) rotatif.

10. Dispositif (1) selon la revendication 9, **caractérisé par** une articulation (16) de compensation, au moyen de laquelle le châssis (13) est susceptible d'être relié avec un véhicule porteur.

11. Dispositif (1) selon la revendication 10, **caractérisé en ce que** l'articulation (16) de compensation comprend des barres de traction (17) ou des barres de pression (18) placées à la parallèle, montées de manière pivotante.

12. Dispositif (1) selon l'une quelconque des revendications précédentes, **caractérisé en ce que** le premier élément (7) rotatif et / ou la roue de guidage (15) sont susceptibles d'être maintenus en contact avec le flanc (3) d'une digue (2) concernée, sous l'effet d'une force d'un ressort.

13. Dispositif (1) selon l'une quelconque des revendications précédentes, **caractérisé en ce que** le premier élément (7) rotatif et le deuxième élément (8) rotatif disposent d'un entraînement (19, 20) motorisé.
